# EUROPEAN PATENT APPLICATION

(11) **EP 2 701 021 A1**
(43) Date of publication of application: **26.02.2014**
(21) Application number: 11791192.5
(22) Date of filing: 18.04.2011
(51) Int. Cl.: G05B 19/05, G06F 13/00

(54) **PROGRAMMABLE LOGIC CONTROLLER**

(71) Applicant: Mitsubishi Electric Corporation, Tokyo 100-8310 (JP)
(72) Inventor: NAKANO, Fumihito, Tokyo 100-8310 (JP)
(74) Representative: HOFFMANN EITLE
(86) International application number: PCT/JP2011/059530
(87) International publication number: WO 2012/143993

(57) **Abstract**

A PLC is enabled to determine whether device data has been completely transferred to an FTP server and is improved in the flexibility of setting for a completed-transfer notice code. To this end, the PLC includes a logging section for logging device data and outputting a log file describing the results of logging of the device data to a memory card; and a file transfer section for transferring the log file delivered to the memory card to the FTP server. After having completely transferred all the data that constitutes the log file (Yes in step S15), the file transfer section inserts the completed-transfer notice code specified by a logging setting parameter 40 predefined by the user into the log file transferred to the FTP server and stored in the FTP server (step S17).

## Description

### Field

The present invention relates to a programmable logic controller (hereinafter referred to as the PLC) which has a function of sending device data to an external server.

### Background

In general, the PLC for controlling a controlled device such as an industrial machine has a device memory for temporarily storing device data concerning the controlled device and reads/writes the device data according to a sequence program or a user program, thereby controlling the controlled device.

Furthermore, in order to detect troubles or the like that may occasionally occur in the controlled device, the PLC is configured such that the operating condition of the controlled device or the operating condition of the PLC itself can be acquired from outside. More specifically, the PLC is provided in advance with logging setting parameters, which serve as various conditions for device data to be logged, and logs the device data based on the logging setting parameters. Thus, the PLC can send logged device data to an external FTP server.

Here, there was a problem that when a file created by logging the device data is sent to the FTP server, the FTP server could not keep track of the completion of the file transfer.

To address such a problem, for example, a technique for writing, at the end of the sent data, specific end data which is indicative of the end of the sent data is disclosed in Patent Literature 1. Furthermore, a technique which is used to add records to files or databases in a manner such that end information is attached to the end of a record to be added, and after the record has been completely added, the end information that had been attached to the end of the previous data before the current record was added, is changed to continuing information, is disclosed in Patent Literature 2.

### Citation List

### Patent Literature

Patent Literature 1: Japanese Patent Application Laid-open No. H7-098677
Patent Literature 2: Japanese Patent Application Laid-open No. H7-110784

### Summary

### Technical Problem

However, the technique disclosed in Patent Literature 1 above is configured to use a specific code pre-defined by the system as a completed-transfer notice code indicative of the end of transmission data. Thus, with the technique, there was a problem that the completed-transfer notice code could not be changed at will by a set parameter. On the other hand, there was a problem with the technique disclosed in Patent Literature 2 mentioned above that the technique was not intended for creating a new file but only for attaching the end information in order to add data to a file. Furthermore, there was also another problem with these techniques that the completed-transfer notice code is attached only to the end of the file.

The present invention was developed in view of the aforementioned problems. It is therefore an object of the invention to provide a PLC which can determine whether device data has been completely transferred to an FTP server. It is another object of the invention to provide a PLC which is improved in the flexibility of setting for the completed-transfer notice code.

### Solution to Problem

In order to solve the aforementioned problems and attain the aforementioned object, the programmable logic controller is provided with: a log memory; a logging section for logging device data and outputting a log file describing a result of logging of the device data to the log memory; and a file transfer section for transferring the log file output to the log memory, to an external server, wherein after having completely transferred all the data that constitutes the log file, the file transfer section adds a completed-transfer notice code specified by a parameter predefined by a user, to the log file transferred to the server and stored in the server.

### Advantageous Effects of Invention

The programmable logic controller according to the present invention is enabled to determine whether a log file has been completely transferred to the server by checking whether the completed-transfer notice code has been inserted therein. Furthermore, since the user is enabled to change, as desired, a character string used as the completed-transfer notice code by setting a parameter, the flexibility of setting for the completed-transfer notice code can be improved.

### Brief Description of Drawings

FIG. 1 is a block diagram illustrating a system which employs a PLC according to an embodiment.
FIG. 2-1 is an explanatory view illustrating a log file that an FTP server has received.
FIG. 2-2 is an explanatory view illustrating a log file that an FTP server has received.
FIG. 3 is a view illustrating the front portion of a PLC unit.
FIG. 4 is a view illustrating the internal configuration of a PLC unit.
FIG. 5 is an explanatory view illustrating the memory structure of a memory card.
FIG. 6 is an explanatory view illustrating the memory structure of a work memory.
FIG. 7 is an explanatory view illustrating the memory structure of a memory card.
FIG. 8 is an explanatory view illustrating the memory structure of a work memory.
FIG. 9 is an explanatory flowchart illustrating the operation of a PLC 100.

### Description of Embodiment

Now, a PLC according to an embodiment of the present invention will be described in more detail below with reference to the drawings. Note that the invention will not be limited by the embodiment.

### Embodiment

### (Exemplary system configuration)

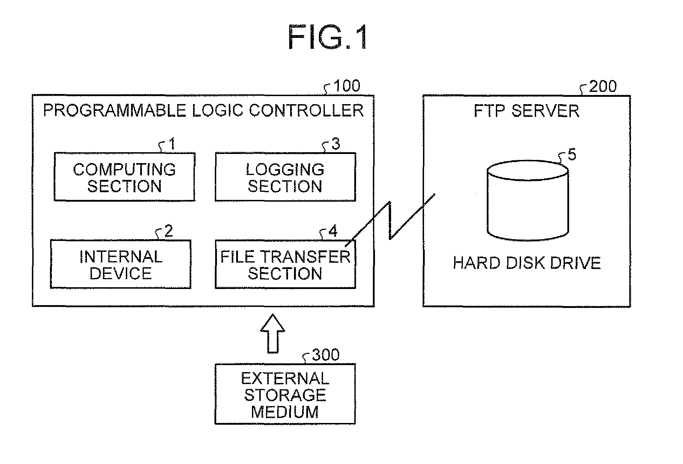

FIG. 1 is a block diagram illustrating a system that employs a PLC according to the present embodiment. The PLC 100 includes a computing section 1 for using a user program to perform computing; an internal device 2 for storing device data to be used for computing by the computing section 1; a logging section 3 for logging the device data in the internal device 2 to output the result of logging to a file; and a file transfer section 4 for transferring by FTP (File Transfer Protocol) a file (hereinafter referred to as the log file) describing the value of device data acquired by logging to an FTP server 200. Furthermore, the PLC 100 is connected with a nonvolatile external storage medium 300 which stores log files. The logging section 3 stores the log file in the external storage medium 300, and the file transfer section 4 sends the log file stored in the external storage medium 300 to the FTP server 200. The FTP server 200, which includes a hard disk drive 5, stores the log file transferred from the PLC 100 in the hard disk drive 5. Note that the log file is not limited to a particular file format, but may employ, for example, the CSV format.

According to the present embodiment, after having sent the log file read from the external storage medium 300 to the FTP server 200, the file transfer section 4 embeds a completed-transfer notice code in the log file stored in the hard disk drive 5.

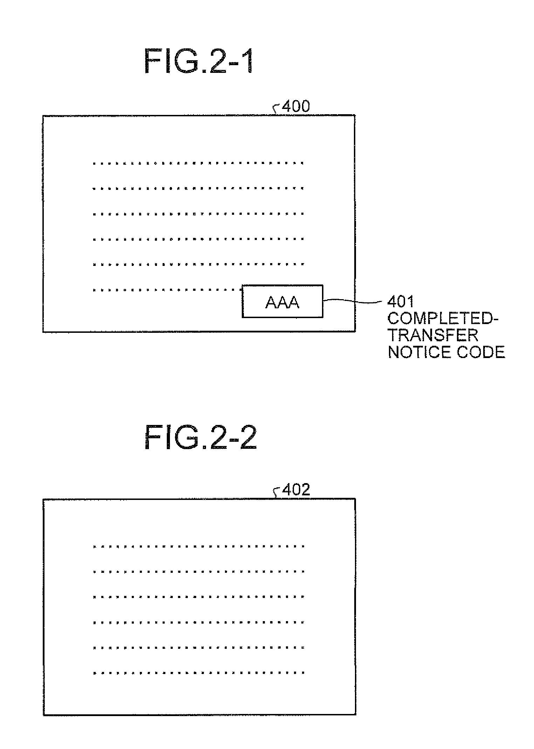

FIG. 2-1 and FIG. 2-2 are an explanatory view illustrating a log file received by the FTP server 200. FIG. 2-1 shows the log file all the data of which has been completely file transferred to and received by the FTP server 200, and FIG. 2-2 shows a log file which has been received by but not completely transferred to the FTP server 200 from beginning to end of the log file. As shown in FIG. 2-1, after having been completely file transferred, a log file 400 has a description "AAA" attached to the end thereof as a completed-transfer notice code 401. In contrast to this, a log file 402 having been incompletely file transferred has no completed-transfer notice code 401 attached thereto. The user can check whether the completed-transfer notice code 401 has been attached to the log file stored in the FTP server 200, thereby determining whether the file has been completely transferred to be available or the file has been incompletely transferred to be unavailable.

Note that in the aforementioned example, the completed-transfer notice code 401 is attached to the end of the log file 400. However, according to the embodiment of the present invention, the user can set a parameter to thereby change the position at which the completed-transfer notice code 401 is embedded. Furthermore, the description "AAA" of the completed-transfer notice code 401 can be changed as desired by a parameter. The setting for the completed-transfer notice code 401 is made flexible in this manner. Thus, when allowing the computer to determine whether the log file 400 is available by using an application program, the user can change the setting according to the specification of the application program, thereby providing improved flexibility in the choice of application programs.

### (Configuration of PLC 100)

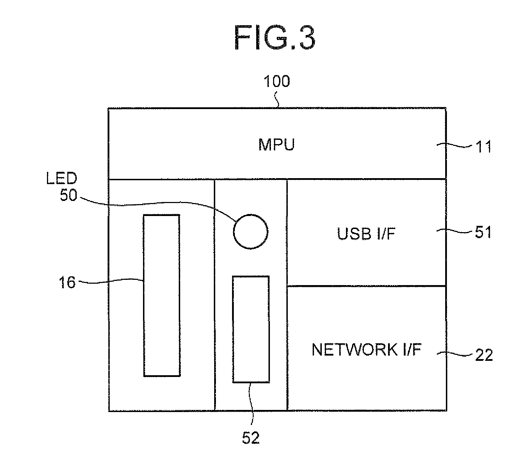

FIG. 3 is a view showing the front portion of the PLC 100. The PLC 100 shown in FIG. 3 includes an MPU 11 for controlling the processing within the PLC 100; a memory card interface (I/F) 16 at which the insertion slot of a memory card (memory card 18 to be described later) as the external storage medium 300 is provided; an LED 50; a USB I/F 51; a switch 52; and a network interface (I/F) 22.

Inserting the memory card 18 into the memory card I/F 16 allows the PLC 100 to retrieve a file stored on the memory card 18 via the memory card I/F 16 as well as to store the log file 400 in the memory card 18.

The network interface 22 is an interface for transferring the log file 400 to the FTP server 200 and employs, for example, Ethernet (registered trademark). The USB I/F 51 is an interface to be connected with a programming device for setting parameters or user programs. The LED 50 is turned ON when the PLC 100 is in a RUN state, indicating the RUN state to the user. Note that the LED 50 may also blink to indicate other than the RUN state. The switch 52 is depressed when the PLC 100 is operated. Depressing the switch 52 causes the PLC 100 to move to the RUN state.

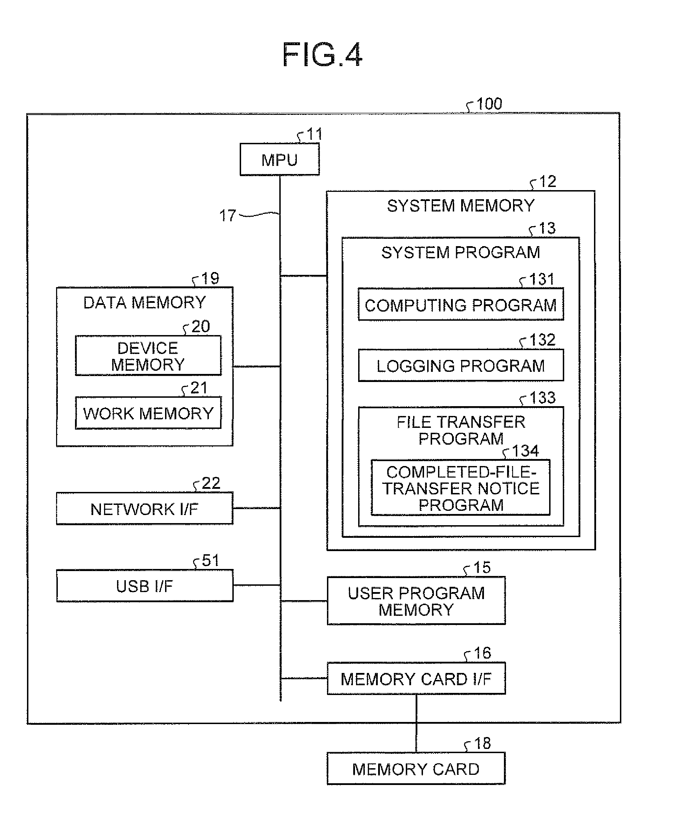

FIG. 4 is a view illustrating the internal configuration of the PLC 100 shown in FIG. 1. As illustrated, the PLC 100 has the MPU 11, a system memory 12, a user program memory 15, a data memory 19, the memory card I/F 16, the USB I/F 51, and the network I/F 22. Between each of these processing sections, an internal bus 17 interconnects.

The user program memory 15 has a user program stored therein. Using the user program stored in the user program memory 15, the MPU 100 reads/writes device data, thereby providing control to a controlled device.

The system memory 12 stores a system program 13 for implementing the processing procedure for each command of the user program. More specifically, the system program 13 stores a computing program 131 for allowing the MPU 11 to function as the computing section 1; a logging program 132 for allowing the MPU 11 to function as the logging section 3; and a file transfer program 133 for allowing the MPU 11 to function as the file transfer section 4. Furthermore, the file transfer program 133 includes a completed-file-transfer notice program 134 for inserting the completed-transfer notice code 401 into the log file 400 which has been completely transferred to and stored in the hard disk drive 5 of the FTP server 200.

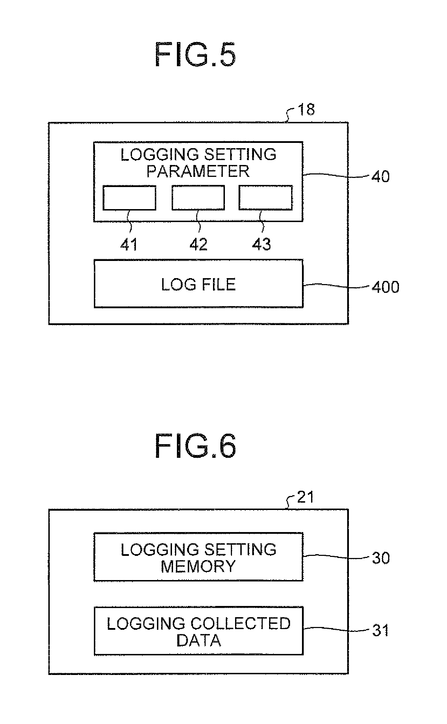

FIG. 5 is an explanatory view illustrating the memory structure of the memory card 18. As illustrated, the memory card 18 stores a logging setting parameter 40 which has been set using a programming device. The logging setting parameter 40 can be set as desired, for example, on a setting window displayed on the display of the programming device connected via the USB I/F 51. Included as the setting items of the logging setting parameter 40 are a setting 41 for specifying whether to insert the completed-transfer notice code 401, a setting 42 for specifying a character string to be used as the completed-transfer notice code 401, and a setting 43 for specifying the position at which the completed-transfer notice code 401 is inserted. Note that the setting items for the logging setting parameter 40 are not limited to these settings. The memory card 18 may also store parameters other than the logging setting parameter 40. Parameters other than the logging setting parameter 40 may include, for example, settings for specifying the computing cycle of a user program and the area of the data memory 19 to be used as a device memory 20. The memory card 18 may further store the log file 400 which is output as the result of logging.

A work memory 21 and the device memory 20 serving as the internal device 2 are ensured as the data memory 19. FIG. 6 is an explanatory view illustrating the memory structure of the work memory 21. The MPU 11 loads the logging setting parameter 40 stored on the memory card 18 to the work memory 21, and then executes the completed-file-transfer notice program 134 according to the logging setting parameter 40 loaded to the work memory 21. The work memory 21 also temporarily stores device data collected by logging (logging collected data 31). That is, according to the logging program 132, the MPU 11 logs the device data stored in the device memory 20 as well as successively stores the device data, collected by logging, in the work memory 21 as the logging collected data 31. Then, according to the logging program 132, the MPU 11 outputs the logging collected data 31, as the log file 400, to the memory card 18 at predetermined timing. The log file 400 output to the memory card 18 is transferred by the MPU 11 to the FTP server 200 according to the file transfer program 133.

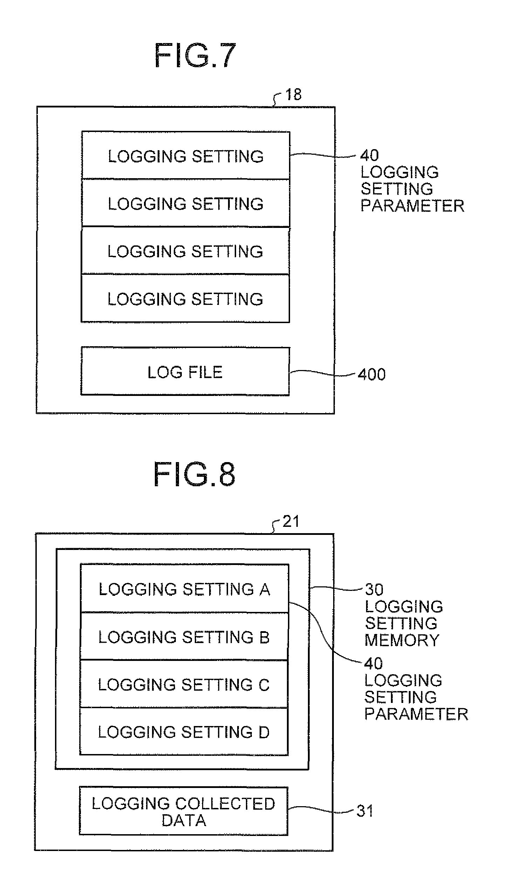

Note that a plurality of logging setting parameters 40 may also be set. FIG. 7 is an explanatory view illustrating the memory structure of the memory card 18 when the plurality of logging setting parameters 40 are set. FIG. 8 is an explanatory view illustrating the memory structure of the work memory 21 when a plurality of logging setting parameters 40 are set. As shown in FIG. 7, the memory card 18 stores four sets of logging setting parameters 40 (logging settings A to D), while as shown in FIG. 8, the logging settings A to D are loaded into a logging setting memory 30 of the work memory 21. Although not illustrated for the sake of clarity, the logging settings A to D each individually include the settings 41 to 43. The PLC 100 selects the logging setting parameter 40 to be used among the logging settings A to D according to another parameter that is set by the user.

Note that the PLC 100 may also be capable of individually setting the logging setting parameter 40 for each address to be logged. That is, the logging settings A to D each include as a setting an address to be logged, and the PLC 100 outputs the log file 400 to each address that is individually set to the logging settings A to D. For the individual log file 400, whether or not to insert the completed-transfer notice code 401, the character string as the completed-transfer notice code 401, and the position at which the completed-transfer notice code 401 is inserted are determined according to the settings 41 to 43 that are included in the corresponding logging settings of the logging settings A to D.

### (Operation of PLC 100)

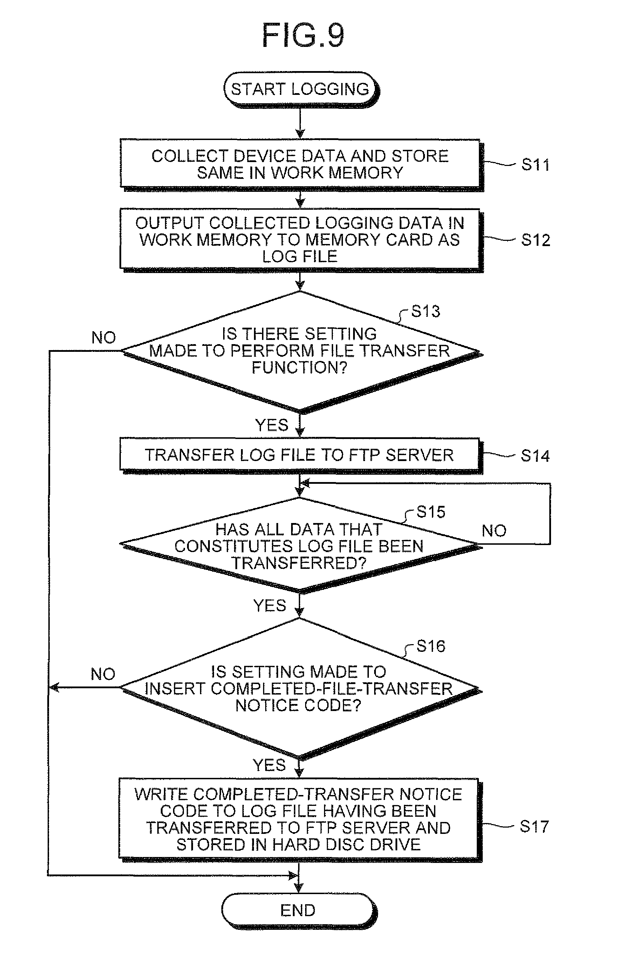

A description will next be made to the operation of the PLC 100 according to the embodiment of the present invention. FIG. 9 is an explanatory flowchart for the operation of the PLC 100. First, with the timing the log file 400 is created, the file transfer program 133 is executed. That is, the logging section 3 collects device data, and then stores the collected device data as the logging collected data 31 in the work memory 21 (step S11). Then, the logging section 3 outputs the logging collected data 31 as the log file 400 to the memory card 18 (step S12). If the setting for executing the file transfer program 133 is described in the user program (Yes in step S13), then the file transfer section 4 transfers the log file 400 to the FTP server 200 (step S14). If no setting for executing the file transfer program 133 is available (No in step S13), then the processing of step S14 onward is skipped, and the operation is ended.

After the process in step S14, the file transfer section 4 determines whether all the data constituting the log file 400 has been completely transferred to the FTP server 200 (step S15). Then, the file transfer section 4 refers to the logging setting parameter 40 loaded in the work memory 21 to determine whether the setting 41 has been set to insert the completed-transfer notice code 401 (step S16). If the setting 41 has been set to insert the completed-transfer notice code 401 (Yes in step S16), then the file transfer section 4 inserts the completed-transfer notice code 401 to the log file 400 transferred to the FTP server 200 and stored in the hard disk drive 5 according to the completed-file-transfer notice program 134 (step S17), and the operation is ended. Note that the completed-transfer notice code 401 to be inserted uses the character string that is set in the setting 42, and the character string is inserted to the position that is set in the setting 43. If the setting 41 has been so set as not to insert the completed-transfer notice code 401 (No in step S16), then the processing of step S17 is skipped.

As described above, according to the embodiment of the present invention, the PLC is configured to include the logging section 3 for logging device data and outputting the log file 400 describing the results of logging of the device data to the memory card 18 and the file transfer section 4 for transferring to the FTP server 200 the log file 400 which has been output to the memory card 18. After having completely transferred all the data constituting the log file 400, the file transfer section 4 inserts the completed-transfer notice code 401 specified by the logging setting parameter 40 predefined by the user into the log file 400 transferred to the FTP server 200 and stored in the FTP server 200. It is thus possible to determine whether the log file 400 has been completely transferred to the FTP server 200 by checking whether the completed-transfer notice code 401 has been inserted. Furthermore, the character string to be used as the completed-transfer notice code 401 can be changed as desired by setting the logging setting parameter 40, whereby the flexibility of setting for the completed-transfer notice code 401 can be improved.

Note that the completed-transfer notice code 401 has been described as being inserted into the log file 400, but may also be attached to the filename of the log file 400.

Furthermore, the logging setting parameter 40 is configured to include the setting 43 for specifying the position into which the completed-transfer notice code 401 is inserted in the log file 400 transferred to the FTP server 200 and stored in the FTP server 200. The file transfer section 4 is configured to insert the completed-transfer notice code 401 into the position specified by the setting 43. It is thus possible to further improve the flexibility of setting for the completed-transfer notice code 401.

### Industrial Applicability

As described above, the PLC according to the present invention is preferably applicable to a PLC which functions to send device data to an external server.

### Reference Signs List

- 1: COMPUTING SECTION
- 2: INTERNAL DEVICE
- 3: LOGGING SECTION
- 4: FILE TRANSFER SECTION
- 5: HARD DISK DRIVE
- 12: SYSTEM MEMORY
- 13: SYSTEM PROGRAM
- 15: USER PROGRAM MEMORY
- 16: MEMORY CARD I/F
- 17: INTERNAL BUS
- 18: MEMORY CARD
- 19: DATA MEMORY
- 20: DEVICE MEMORY
- 21: WORK MEMORY
- 22: NETWORK I/F
- 30: LOGGING SETTING MEMORY
- 31: LOGGING COLLECTED DATA
- 40: LOGGING SETTING PARAMETER
- 41: SETTING
- 42: SETTING
- 43: SETTING
- 51: USB I/F
- 52: SWITCH
- 131: COMPUTING PROGRAM
- 132: LOGGING PROGRAM
- 133: FILE TRANSFER PROGRAM
- 134: COMPLETED-FILE-TRANSFER NOTICE PROGRAM
- 200: FTP SERVER
- 300: EXTERNAL STORAGE MEDIUM
- 400: LOG FILE
- 401: COMPLETED-TRANSFER NOTICE CODE

## Claims

1. A programmable logic controller, comprising:
a log memory;
a logging section for logging device data and outputting a log file describing a result of logging of the device data to the log memory; and
a file transfer section for transferring the log file output to the log memory, to an external server, wherein
after having completely transferred all the data that constitutes the log file, the file transfer section adds a completed-transfer notice code specified by a parameter predefined by a user, to the log file transferred to the server and stored in the server.

2. The programmable logic controller according to claim 1, wherein
the parameter includes a setting for specifying a position into which the completed-transfer notice code is inserted in the log file transferred to the server and stored in the server, and
the file transfer section inserts the completed-transfer notice code into the position specified by the parameter.

3. The programmable logic controller according to claim 1 or 2, wherein the log memory is composed of a removable nonvolatile memory.
